# EUROPÄISCHE PATENTSCHRIFT

(11) **EP 2 527 275 B1**
(45) Veröffentlichungstag und Bekanntmachung des Hinweises auf die Patenterteilung: **06.09.2017**
(21) Anmeldenummer: 12168605.9
(22) Anmeldetag: 21.05.2012
(51) Int. Cl.: B65G 23/22, H02K 7/14, H02K 16/02

(54) **Antriebsvorrichtung, Förder-Vorrichtung und Verwendung**
Drive device, conveyor apparatus and method of using
Dispositif d'entraînement, appareil transporteur et méthode d'utilisation

(30) Priorität: 24.05.2011 DE 102011102432
(43) Veröffentlichungstag der Anmeldung: 28.11.2012
(73) Patentinhaber: Weber Maschinenbau GmbH Breidenbach, 35236 Breidenbach (DE)
(72) Erfinder:
(74) Vertreter: Manitz Finsterwald Patentanwälte PartmbB

(56) Entgegenhaltungen:
- WO-A1-99/39426
- WO-A1-2006/105839
- DE-A1-102009 023 730
- FR-A- 972 825
- GB-A- 2 412 104
- US-A- 4 441 003

## Beschreibung

Die Erfindung betrifft eine Antriebsvorrichtung mit einer Koaxialwellenanordnung, die mehrere zumindest bereichsweise koaxial zueinander angeordnete Antriebswellen umfasst, die jeweils mit ihrer Drehachse auf einer gemeinsamen Antriebsdrehachse liegen.

Derartige Antriebsvorrichtungen sind beispielsweise aus WO 99/39426 A1 und FR 972 825 bekannt.

Die Erfindung betrifft auch eine Vorrichtung zum mehrspurigen Fördern von einzelnen Scheiben oder Scheibenportionen aufgeschnittener Lebensmittelprodukte oder von aufzuschneidenden Lebensmittelprodukten, mit mehreren nebeneinander angeordneten Förderern, insbesondere Endlosförderbändern, die jeweils wenigstens ein um eine Achse rotierend antreibbares Antriebsorgan, insbesondere eine Rolle oder eine Walze für ein oder mehrere Endlosbänder, umfassen, wobei die Achsen der Antriebsorgane auf einer gemeinsamen Antriebsdrehachse liegen.

Derartige Fördermaschinen, insbesondere zum Anordnen von Dokumenten für Postwurfsendungen, sind z.B. aus GB 2 412 104 A grundsätzlich bekannt.

Insbesondere auf dem technischen Gebiet des Aufschneidens von Lebensmittelprodukten wie z.B. Wurst oder Käse mit Hochgeschwindigkeitsslicern wird zunehmend dazu übergangen, mehrere Produkte gleichzeitig aufzuschneiden, wobei die Produkte einem rotierenden Messer des Slicers gleichzeitig auf mehreren Spuren zugeführt werden. Um einzelne Scheiben oder Scheibenportionen gleichen Gewichts zu erhalten, muss die Produktzufuhr dazu in der Lage sein, die Produkte in den einzelnen Spuren unabhängig voneinander zuführen zu können, d.h. die einzelnen Förderspuren müssen unabhängig voneinander antreibbar sein. Was den mehrspurigen Transport der Scheiben bzw. Portionen anbetrifft, so wird ebenfalls ein spurindividuelles Arbeiten gewünscht, d.h. die den einzelnen Spuren zugeordneten Förderer für die Scheiben bzw. Portionen müssen unabhängig voneinander betrieben werden können. Diese Förderer werden insbesondere jeweils von einem Endlosförderband gebildet, das eine drehend antreibbare Rolle oder Walze umfasst, um die das Endlosband herumgeführt ist. Diese Antriebsrollen oder -walzen liegen auf einer gemeinsamen Antriebsdrehachse. Ohne das Erfordernis eines spurindividuellen Förderns könnte eine gemeinsame Antriebswelle mit einem einzigen gemeinsamen Antriebsmotor vorgesehen werden, um die einzelnen Endlosbänder gleichzeitig und stets in gleicher Weise, d.h. mit gleicher Förderrichtung und gleicher Fördergeschwindigkeit, anzutreiben. Wenn - wie oben geschildert - ein unabhängiger Antrieb der Förderer vonnöten ist, kann ersichtlich mit einer einzigen gemeinsamen Antriebswelle nicht gearbeitet werden. Insbesondere auf dem vorstehend erläuterten technischen Gebiet besteht somit sowohl für die mehrspurige Produktzufuhr vor dem Schneidvorgang als auch für den mehrspurigen Abtransport der Scheiben oder Portionen nach dem Schneidvorgang ein Bedarf an einer Lösung, die bei einfachem und platzsparendem Aufbau sowie schneller und präziser Steuerbarkeit einen spurindividuellen Betriebe mehrerer Fördereinrichtung ermöglicht.

Aufgabe der Erfindung ist es daher, eine solche Lösung anzugeben, wobei dies zwar insbesondere für das technische Gebiet des Förderns von Lebensmittelprodukten erfolgen, diese Lösung aber auch auf anderen technischen Gebieten einsetzbar sein soll.

Die Lösung dieser Aufgabe erfolgt durch eine Antriebsvorrichtung nach Anspruch 1.

Eine erfindungsgemäße Fördervorrichtung wird in Anspruch 7 vorgestellt. Hierbei wird auch der Antriebsmotor mit seiner Rotoranordnung auf der gemeinsamen Antriebsdrehachse und somit besonders platzsparend angeordnet.

Es können mehrere elektrische Antriebsmotoren hintereinander und/oder zumindest teilweise ineinander liegend angeordnet werden, wobei jeder Antriebsmotor wenigstens eine Antriebswelle antreibt. Auch eine solche "kaskadierte" Anordnung von Elektromotoren hat aufgrund des Umstandes, dass die Rotoren auf der gemeinsamen Antriebsdrehachse liegen, den Vorteil eines wenig Bauraum benötigenden Antriebs, der die eingangs geschilderte Problematik auf elegante Art und Weise löst.

Alternativ kann für wenigstens zwei Antriebswellen ein gemeinsamer Antriebsmotor vorgesehen sein. Dieser gemeinsame Antriebsmotor kann eine Rotoranordnung aus wenigstens zwei koaxial zueinander oder hintereinander angeordneten Rotoren umfassen, die jeweils mit ihrer Drehachse auf der gemeinsamen Antriebsdrehachse liegen. Dabei kann jeder Rotor eine der Antriebswellen bilden oder mit einer der Antriebswellen verbunden sein.

Es kann auch ein einziger Antriebsmotor für alle Antriebswellen vorgesehen sein. Alternativ kann vorgesehen sein, einen Teil der Antriebswellen mit einem ersten gemeinsamen Antriebsmotor auf der einen Seite der Koaxialwellenanordnung bzw. der Gesamtanordnung anzutreiben und auf der anderen Seite für die übrigen Antriebswellen einen zweiten gemeinsamen Antriebsmotor vorzusehen. Die Förderer liegen dann zwischen den beiden Antriebsmotoren. Dabei können die Antriebswellen hälftig auf die beiden Antriebsmotoren aufgeteilt werden, so dass die eine Hälfte der Antriebswellen von der einen Seite und die andere Hälfte der Antriebswellen von der anderen Seite angetrieben wird. Alternativ kann auch eine asymmetrische Aufteilung vorgenommen werden, so dass z.B. bei insgesamt sechs Antriebswellen ein Antriebsmotor auf der einen Seite vier Antriebswellen antreibt und ein Antriebsmotor auf der gegenüberliegenden Seite zwei Antriebswellen antreibt.

Besonders vorteilhaft ist eine wie auch immer geartete Aufteilung des Antriebs der Antriebswellen auf zwei an gegenüberliegenden Seiten antreibende Antriebsmotoren in einer Anwendung, in der mehrere nebeneinander liegende Förderer, insbesondere Endlosförderbänder, unabhängig voneinander anzutreiben sind.

Eine mögliche konkrete Ausgestaltung sieht vor, dass der Antriebsmotor wenigstens einen zumindest zwei Rotoren zugeordneten gemeinsamen Stator umfasst, wobei die Rotoren mittels der Steuereinrichtung individuell ansteuerbar sind. Dabei kann der Stator zur Erzeugung eines gemeinsamen Magnetfeldes für die Rotoren ausgebildet sein und jeder Rotor eine eigene Einrichtung aufweisen, die mit einem zeitlich veränderlichen Strom beaufschlagbar ist.

Hierbei erfolgt die für einen unabhängigen Betrieb der Förderer erforderliche Spurindividualisierung folglich über die einzelnen Rotoren des Antriebsmotors, d.h. durch eine entsprechende unabhängige Ansteuerung bzw. Erregung der den einzelnen Rotoren zugeordneten Einrichtungen, bei denen es sich insbesondere jeweils um mit einem elektrischen Strom beaufschlagbare Spulen oder Wicklungen handelt.

Die vorstehend erwähnte unabhängige Ansteuerung der Rotoren umfasst auch eine mögliche Variante, bei der z.B. die Rotoren bzw. Spulen der Rotoren zwar in untereinander gleicher Weise mit einem elektrischen Strom beaufschlagt werden, die Spurindividualisierung jedoch durch eine durch Ansteuerung veränderliche spurspezifische Abschirmung bzw. Schwächung eines von dem gemeinsamen Stator bereitgestellten Magnetfeldes erfolgt.

Alternativ kann die Spurindividualisierung auch durch eine entsprechende spurspezifische Ausgestaltung bzw. Ansteuerung des Stators des Antriebsmotors erfolgen, indem z.B. der Stator mehrere jeweils einem der Rotoren zugeordnete Statorabschnitte aufweist, die unabhängig voneinander jeweils zur Erzeugung eines zeitlich veränderlichen Magnetfeldes ansteuerbar sind. Durch geeignete Mittel kann dafür gesorgt werden, dass jeder Statorabschnitt im Wesentlichen nur mit dem ihm zugeordneten Rotor zusammenwirkt.

Der vorstehend erläuterte Aspekt der Erfindung betrifft somit eine Mehrspurfördervorrichtung mit einer Koaxialwellenanordnung, die durch zumindest einen ebenfalls auf der gemeinsamen Antriebsdrehachse angeordneten Elektromotor angetrieben wird.

Der ebenfalls vorstehend erläuterte Aspekt eines einzigen Elektromotors, der insbesondere eine Koaxial- und/oder Hintereinanderanordnung mehrerer Rotoren umfasst, als Antrieb für eine Koaxialwellenanordnung ist erfindungsgemäß nicht auf Förderanwendungen beschränkt, sondern entsprechend der der Erfindung zugrunde liegenden Aufgabe universell einsetzbar.

Dementsprechend ist die Erfindung auf eine Antriebsvorrichtung nach dem Oberbegriff des Anspruchs 1 gerichtet. Erfindungsgemäß sind hierbei die Antriebswellen jeweils an derselben Seite der Rotoren angeordnet.

Vorgestellt wird ferner die Verwendung einer erfindungsgemäßen Antriebsvorrichtung gemäß Anspruch 6.

Generell ist die Anzahl der Antriebswellen grundsätzlich beliebig. Insbesondere sind zwei, drei, vier, fünf oder sechs Antriebswellen vorgesehen, wobei auch eine größere Anzahl von Antriebswellen vorgesehen sein kann, und zwar sowohl eine gerade Anzahl als auch eine ungerade Anzahl von Antriebswellen.

Wenn die Erfindung zum unabhängigen Antreiben mehrerer nebeneinander liegender Förderer, insbesondere Endlosförderbänder, verwendet wird, dann kann die Erfindung besonders vorteilhaft dazu eingesetzt werden, mittels eines Slicers durch Aufschneiden mehrerer nebeneinander zugeführter Lebensmittelprodukte erzeugte Scheiben oder Scheibenportionen mehrspurig abzutransportieren und im Rahmen dieses Abtransportes, z.B. vor dem eigentlichen Abtransportvorgang oder während des Transportierens, auszurichten. Dies ermöglicht die Erfindung durch die Fähigkeit, die einzelnen Förderer unabhängig voneinander anzutreiben, wobei z.B. auch erforderlichenfalls ein oder mehrere Förderer vorübergehend in einen Stillstand versetzt werden können, während in den anderen Spuren weiterhin eine Transportbewegung erfolgt.

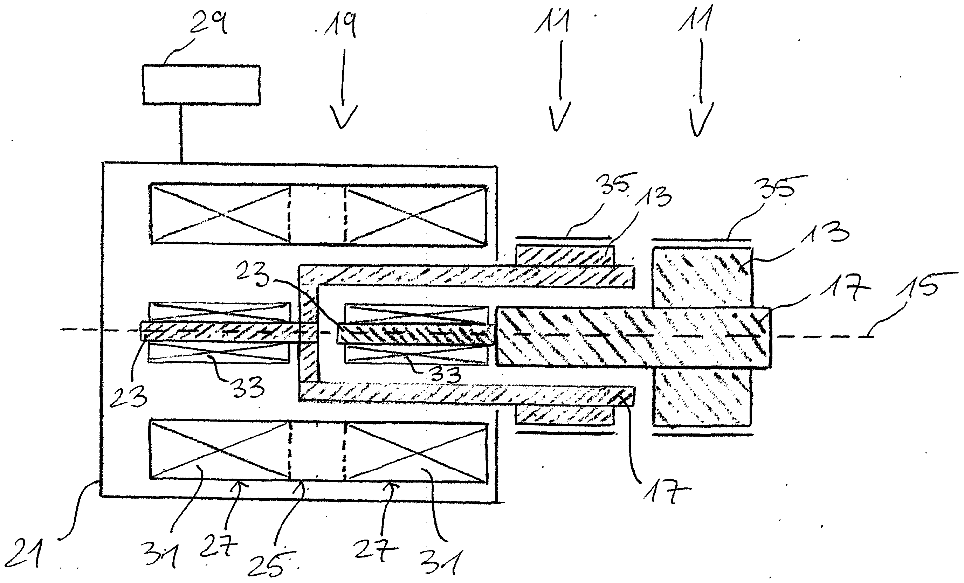

Die Erfindung wird im Folgenden beispielhaft unter Bezugnahme auf die Zeichnung beschrieben, deren einzige Figur eine Koaxialanordnung zweier Antriebswellen zeigt, die von einem einzigen gemeinsamen Elektromotor angetrieben werden, der zwei hintereinander angeordnete Rotoren umfasst, die jeweils mit einer der Antriebswellen drehfest verbunden sind.

Die in der Figur schematisch dargestellte erfindungsgemäße Fördervorrichtung umfasst zwei Förderer 11, die jeweils ein Endlosförderband 35 und ein Antriebsorgan 13 umfassen, um welches das Förderband 35 herumgeführt ist und welches in Rotation versetzbar ist, um das Förderband 35 anzutreiben. Die beiden nebeneinander liegenden Förderbänder 35 bilden jeweils eine Förderspur, längs welcher grundsätzlich beliebige Gegenstände in beiden Richtungen und mit prinzipiell beliebiger, insbesondere untereinander unterschiedlicher Fördergeschwindigkeit transportierbar sind.

Die Förderer 11 sind unabhängig voneinander antreibbar, und zwar mittels einer erfindungsgemäßen Antriebsvorrichtung, die einen Elektromotor 19 und zwei Antriebswellen 17 umfasst, die bereichsweise ineinander liegend angeordnet sind. Eine radial innere Antriebswelle 17 ist mit dem in der Figur rechten Förderer 11 verbunden, und zwar durch eine drehfeste Koppelung mit dem Antriebsorgan 13. Eine radial äußere Antriebswelle 17 ist durch drehfeste Koppelung mit dem Antriebsorgan 13 mit dem in der Figur linken Förderer 11 verbunden. Der Außendurchmesser der beiden Antriebsorgane 13 ist gleich groß, so dass die beiden nebeneinander liegenden Endlosförderbänder 35 in einer gemeinsamen Transportebene liegen.

Die gemeinsame Antriebsdrehachse 15 dieser Anordnung aus Antriebswellen 17 und Antriebsmotor 19 fällt mit den Drehachsen der Antriebswellen 17, Antriebsorgane 13 und Rotoren 23 zusammen.

Der Elektromotor 19 umfasst zwei längs der Antriebsdrehachse 15 hintereinander angeordnete Rotoren 23. Der in der Figur rechte Rotor 23 ist mit der radial inneren Antriebswelle 17 drehfest verbunden, während der in der Figur linke Rotor 23 mit der radial äußeren Antriebswelle 17 verbunden ist.

Ferner umfasst der Elektromotor 19 eine Statoranordnung für die beiden Rotoren 23, auf die nachstehend näher eingegangen wird. Die Statoranordnung und die Rotoren 23 befinden sich in einem gemeinsamen Gehäuse 21 des Elektromotors 19.

Der Elektromotor 19 ist mit einer Steuereinrichtung 29 verbunden, die Bestandteil einer weiteren Steuereinrichtung einer nicht dargestellten übergeordneten Vorrichtung oder mit dieser weiteren Steuereinrichtung verbunden sein kann, wobei die übergeordnete Vorrichtung eine solche ist, in welche die Förderer 11 in wie auch immer gearteter Weise integriert sind oder in Verbindung mit welcher die Förderer 11 eingesetzt werden. Insbesondere kann es sich bei der übergeordneten Vorrichtung um einen Hochgeschwindigkeitsslicer handeln, der mehrere Lebensmittelprodukte gleichzeitig aufschneidet, wobei die Förderer 11 dazu dienen, die entstehenden Scheiben oder Scheibenportionen abzutransportieren. Der Betrieb der Förderer 11 wird über den Elektromotor 19 mittels der Steuereinrichtung 29 entsprechend den jeweiligen Erfordernissen gesteuert.

Die erfindungsgemäße Anordnung ermöglicht es, die Förderer 11 unabhängig voneinander zu betreiben. Im Rahmen der vorstehend erläuterten Anwendung beispielsweise kann dieser unabhängige Betrieb insbesondere dazu genutzt werden, auf den Endlosförderbändern 35 aufliegende Scheiben oder Scheibenportionen bezüglich einer quer zur Förderrichtung verlaufenden (gedachten) Linie auszurichten, um z.B. hierdurch die Scheiben bzw. Scheibenportionen einer oder mehreren nachgeordneten Einrichtungen in einer ausgerichteten Konfiguration zuzuführen.

Der unabhängige Betrieb der Förderer 11 wird dadurch erreicht, dass der Elektromotor 19 mittels der Steuereinrichtung 29 entsprechend angesteuert wird. Die Figur veranschaulicht gleichzeitig zwei mögliche Varianten für eine derartige spurindividualisierte Ansteuerung.

In einer ersten Variante kann ein gemeinsamer Stator 25 für die beiden Rotoren 23 vorgesehen sein, der ein zeitlich unverändertes Magnetfeld erzeugt, wobei jeder Rotor 23 mit einer Einrichtung 33 versehen ist, insbesondere in Form einer oder mehrerer Spulen oder Wicklungen, die es ermöglicht, den Rotor 23 mit einem zeitlich veränderlichen elektrischen Strom zu beaufschlagen. Diese Ansteuerung der Rotoren 23 kann für die beiden Rotoren 23 unabhängig voneinander erfolgen, so dass zu jedem Zeitpunkt jedem der beiden Rotoren 23 jede beliebige Drehrichtung und jede beliebige Drehgeschwindigkeit verliehen werden kann. Auf diese Weise kann der spurindividuelle Antrieb der beiden Endlosbänder 35 erfolgen.

Das gleiche Resultat kann gemäß einer zweiten Variante erreicht werden, in welcher die Rotoren 23 passiv ausgeführt sind, d.h. nicht individuell ansteuerbar sind, indem die Rotoren 23 z.B. mit Permanentmagneten versehen sind. Die Spurindividualisierung erfolgt durch entsprechende Ausgestaltung und Ansteuerung der Statoranordnung, die z.B. zwei axial hintereinander liegende Statorabschnitte 27 umfasst, die jeweils mit einer Einrichtung 31 versehen sind, insbesondere in Form einer oder mehrerer Spulen oder Wicklungen, die es ermöglicht, ein zeitlich veränderliches Magnetfeld zu erzeugen, mit dem der jeweils zugeordnete Rotor 23 zusammenwirkt. Die Statorabschnitte 27 sind in der Figur durch gestrichelte Linien angedeutet.

Es versteht sich, dass das vorstehend beschriebene Antriebsprinzip und dessen beispielhaft erläuterten Varianten grundsätzlich auf beliebig viele Antriebswellen ausgeweitet werden kann. Prinzipiell genügt hierfür ein einziger elektrischer Antriebsmotor. Es ist auch möglich, auf jeder der beiden Seiten der Förderer 11 jeweils einen Elektromotor 19 anzuordnen, der einen Teil, beispielsweise genau die Hälfte, der Antriebswellen 17 und damit der Endlosförderbänder 35 antreibt.

Die vorstehend erläuterten Ausführungsbeispiele sind insbesondere in Verbindung mit einem Hochgeschwindigkeitsslicer zum gleichzeitigen Aufschneiden mehrerer Lebensmittelprodukte einsetzbar, jedoch nicht auf eine solche Anwendung beschränkt. Grundsätzlich ist das erfindungsgemäße Antriebsprinzip für beliebige Anwendungen geeignet.

### Bezugszeichenliste

- 11: Förderer
- 13: Antriebsorgan
- 15: Antriebsdrehachse
- 17: Antriebswelle
- 19: Antriebsmotor
- 21: Gehäuse
- 23: Rotor
- 25: Stator
- 27: Statorabschnitt
- 29: Steuereinrichtung
- 31: Einrichtung am Statorabschnitt
- 33: Einrichtung am Rotor
- 35: Endlosförderband

## Patentansprüche

1. Antriebsvorrichtung mit
einer Koaxialwellenanordnung, die mehrere zumindest bereichsweise koaxial zueinander angeordnete Antriebswellen (17) umfasst, die jeweils mit ihrer Drehachse auf einer gemeinsamen Antriebsdrehachse (15) liegen, und
einem elektrischen Antriebsmotor (19), der eine Rotoranordnung umfasst, die mehrere zumindest bereichsweise koaxial zueinander und/oder hintereinander angeordnete Rotoren (23) umfasst, wobei jeder Rotor (23) mit seiner Drehachse auf der gemeinsamen Antriebsdrehachse (15) liegt und eine der Antriebswellen (17) bildet oder mit einer der Antriebswellen verbunden ist,
wobei der Antriebsmotor (19) derart ansteuerbar ist, dass die Rotoren (23) unabhängig voneinander antreibbar sind,
**dadurch gekennzeichnet,**
**dass** die Antriebswellen (17) jeweils an derselben Seite der Rotoren angeordnet sind.

2. Vorrichtung nach Anspruch 1,
**dadurch gekennzeichnet,**
**dass** der Antriebsmotor (19) einen mehrere Abschnitte (27) aufweisenden Stator (25) oder mehrere Statoren umfasst, wobei jeder Statorabschnitt (27) oder Stator einem der Rotoren zugeordnet und mittels einer Steuereinrichtung (29) individuell ansteuerbar ist.

3. Vorrichtung nach Anspruch 2,
**dadurch gekennzeichnet,**
**dass** die Statorabschnitte (27) oder Statoren unabhängig voneinander jeweils zur Erzeugung eines zeitlich veränderlichen Magnetfeldes ansteuerbar sind, wobei insbesondere die Rotoren (23) jeweils mit zumindest einem Permanentmagneten versehen sind.

4. Vorrichtung nach einem der Ansprüche 1 bis 3,
**dadurch gekennzeichnet,**
**dass** der Antriebsmotor (19) wenigstens einen zumindest zwei Rotoren (23) zugeordneten gemeinsamen Stator (25) umfasst, wobei die Rotoren (23) mittels einer Steuereinrichtung (29) individuell ansteuerbar sind.

5. Vorrichtung nach Anspruch 4,
**dadurch gekennzeichnet,**
**dass** der Stator (25) zur Erzeugung eines gemeinsamen Magnetfeldes für die Rotoren (23) ausgebildet ist und jeder Rotor (23) eine eigene Einrichtung aufweist, die mit einem zeitlich veränderlichen Strom beaufschlagbar ist.

6. Verwendung einer Antriebsvorrichtung nach einem der vorstehenden Ansprüche zum Antreiben einer Fördervorrichtung mit mehreren nebeneinander angeordneten Förderern (11), insbesondere Endlosförderbändern, zum mehrspurigen Fördern von einzelnen Scheiben oder Scheibenportionen aufgeschnittener Lebensmittelprodukte oder von aufzuschneidenden Lebensmittelprodukten.

7. Vorrichtung zum mehrspurigen Fördern von einzelnen Scheiben oder Scheibenportionen aufgeschnittener Lebensmittelprodukte oder von aufzuschneidenden Lebensmittelprodukten
mit mehreren nebeneinander angeordneten Förderern (11), insbesondere Endlosförderbändern, und mit einer Antriebsvorrichtung nach einem der vorstehenden Ansprüche,
wobei die Förderer (11) jeweils wenigstens ein um eine Achse rotierend antreibbares Antriebsorgan (13), insbesondere eine Rolle oder eine Walze für ein oder mehrere Endlosbänder, umfassen, wobei die Achsen der Antriebsorgane (13) auf einer gemeinsamen Antriebsdrehachse (15) liegen,
wobei jede Antriebswelle (17) abtriebsseitig eines der Antriebsorgane (13) bildet oder mit einem der Antriebsorgane verbunden ist, und mit einer Steuereinrichtung (29), die dazu ausgebildet ist, den Antriebsmotor (19) derart anzusteuern, dass die Förderer (11) unabhängig voneinander antreibbar sind.

8. Vorrichtung nach Anspruch 7,
**dadurch gekennzeichnet,**
**dass** genau ein elektrischer Antriebsmotor (19) vorgesehen ist, dessen Rotoranordnung mehrere zumindest bereichsweise koaxial zueinander und/oder hintereinander angeordnete Rotoren (23) umfasst, wobei jeder Rotor (23) mit seiner Drehachse auf der gemeinsamen Antriebsdrehachse (15) liegt und eine der Antriebswellen (17) bildet oder mit einer der Antriebswellen verbunden ist.

## Claims

1. A drive apparatus having
a coaxial shaft arrangement which comprises a plurality of drive shafts (17) which are arranged coaxially to one another at least regionally, with the axis of rotation of each drive shaft lying on a common rotational drive axis (15); and
having an electric drive motor (19) which comprises a rotor arrangement which comprises a plurality of rotors (23) arranged coaxially to one another and/or behind one another at least regionally, with the axis of rotation of each rotor (23) lying on the common rotational drive axis (15) and forming one of the drive shafts (17) or being connected to one of the drive shafts, wherein the drive motor (19) can be controlled such that the rotors (23) can be driven independently of one another,
**characterized in that**
the drive shafts (17) are each arranged at the same side of the rotors.

2. An apparatus in accordance with claim 1,
**characterized in that**
the drive motor (19) comprises a stator (25) having a plurality of sections (27) or a plurality of stators, with each stator section (27) or stator being associated with one of the rotors and being individually controllable by means of a control device (29).

3. An apparatus in accordance with claim 2,
**characterized in that**
the stator sections (27) or stators are controllable independently of one another in each case for generating a magnetic field variable over time, with in particular the rotors (23) each being provided with at least one permanent magnet.

4. An apparatus in accordance with any one of the claims 1 to 3,
**characterized in that**
the drive motor (19) comprises at least one common stator (25) associated with at least two rotors (23), with the rotors (23) being individually controllable by means of a control device (29).

5. An apparatus in accordance with claim 4,
**characterized in that**
the stator (25) is configured to generate a common magnetic field for the rotors (23) and each rotor (23) has its own device which can be acted on by a current variable over time.

6. Use of a drive apparatus in accordance with any one of the preceding claims for driving a conveying apparatus having a plurality of conveyors (11), in particular continuous conveyor belts, arranged next to one another for the multi-track conveying of individual slices or slice portions of sliced food products or of food products to be sliced.

7. An apparatus for the multi-track conveying of individual slices or slice portions of sliced food products or of food products to be sliced having a plurality of conveyors (11), in particular continuous conveyor belts, which are arranged next to one another; and having a drive apparatus in accordance with any one of the preceding claims,
wherein the conveyors (11) each have at least one drive member (13), in particular a roll or a roller for one or more continuous belts, rotatingly drivable about an axis, with the axes of the drive members (13) lying on a common rotational drive axis (15),
wherein each drive shaft (17) forms one of the drive members (13) at the drive side or is connected to one of the drive members; and having a control device (29) which is configured to control the drive motor (19) such that the conveyors (11) can be driven independently of one another.

8. An apparatus in accordance with claim 7,
**characterized in that**
exactly one electric drive motor (19) is provided whose rotor arrangement comprises a plurality of rotors (23) arranged coaxially to one another and/or behind one another at least regionally, with the axis of rotation of each rotor (23) lying on the common rotational drive axis (15) and forming one of the drive shafts (17) or being connected to one of the drive shafts.

## Revendications

1. Dispositif d'entraînement, comportant
un agencement d'arbres coaxiaux, qui comprend plusieurs arbres d'entraînement (17) agencés au moins localement coaxialement les uns par rapport aux autres et ayant respectivement leurs axes de rotation sur un axe d'entraînement rotatif (15) commun, et
un moteur d'entraînement électrique (19) qui comprend un ensemble de rotors qui comprend plusieurs rotors (23) agencés au moins localement coaxialement les uns par rapport aux autres et/ou les uns derrière les autres, chaque rotor (23) ayant son axe de rotation situé sur l'arbre d'entraînement rotatif (15) commun et formant l'un des arbres d'entraînement (17) ou étant relié à l'un des arbres d'entraînement,
le moteur d'entraînement (19) pouvant être piloté de manière à entraîner les rotors (23) indépendamment les uns des autres,
**caractérisé en ce que**
les arbres d'entraînement (17) sont agencés chacun sur le même côté des rotors.

2. Dispositif selon la revendication 1,
**caractérisé en ce que**
le moteur d'entraînement (19) comprend un stator (25) présentant plusieurs portions (27) ou il comprend plusieurs stators, chaque portion de stator (27) ou chaque stator étant associé à l'un des rotors et pouvant être piloté individuellement à l'aide d'un moyen de commande (29).

3. Dispositif selon la revendication 2,
**caractérisé en ce que**
les portions de stator (27) ou les stators peuvent être pilotés chacun indépendamment les uns des autres pour générer un champ magnétique variable dans le temps, et en particulier les rotors (23) sont munis chacun d'au moins un aiment permanent.

4. Dispositif selon l'une des revendications 1 à 3,
**caractérisé en ce que**
le moteur d'entraînement (19) comprend au moins un stator commun (25) associé à au moins deux rotors (23), les rotors (23) pouvant être pilotés individuellement à l'aide d'un moyen de commande (29).

5. Dispositif selon la revendication 4,
**caractérisé en ce que**
le stator (25) est réalisé pour générer un champ magnétique commun pour les rotors (23) et chaque rotor (23) présente un moyen propre susceptible d'être sollicité par un courant variable dans le temps.

6. Utilisation d'un dispositif d'entraînement selon l'une des revendications précédentes pour entraîner un dispositif de convoyage comprenant plusieurs convoyeurs (11) agencés les uns à côté des autres, en particulier des bandes de convoyage sans fin, destiné(e)s au convoyage sur plusieurs tracés de tranches individuelles ou de portions de tranches de produits alimentaires coupés ou de produits alimentaires à couper.

7. Dispositif de convoyage sur plusieurs tracés de tranches individuelles ou de portions de tranches de produits alimentaires coupés ou de produits alimentaires à couper à l'aide de plusieurs convoyeurs (11) agencés les uns à côté des autres, en particulier de bandes de convoyage sans fin, comportant un dispositif d'entraînement selon l'une des revendications précédentes, dans lequel
les convoyeurs (11) comprennent chacun au moins un organe d'entraînement (13) susceptible d'être entraîné en rotation autour d'un axe, en particulier un rouleau ou un cylindre pour une ou plusieurs bandes sans fin, les axes des organes d'entraînement (13) étant situés sur un axe d'entraînement rotation (15) commun,
chaque arbre d'entraînement (17) forme du côté mené l'un des organes d'entraînement (13) ou est relié à l'un des organes d'entraînement, et comprenant un moyen de commande (29) qui est conçu pour piloter le moteur d'entraînement (19) de telle sorte que les convoyeurs (11) sont susceptibles d'être entraînés indépendamment les uns des autres.

8. Dispositif selon la revendication 7,
**caractérisé en ce que**
il est prévu précisément un moteur d'entraînement électrique (19) dont l'ensemble de rotors comprend plusieurs rotors (23) agencés au moins localement coaxialement les uns par rapport aux autres et/ou les uns derrière les autres, chaque rotor (23) ayant son axe de rotation situé sur l'axe d'entraînement rotatif (15) commun et formant l'un des arbres d'entraînement (17) ou étant relié à l'un des arbres d'entraînement.
